# EUROPEAN PATENT APPLICATION

(11) **EP 3 741 217 A1**
(43) Date of publication of application: **25.11.2020**
(21) Application number: 20181242.7
(22) Date of filing: 22.11.2013
(51) Int. Cl.: A23C 20/00, A23C 20/02, A23C 19/08

(54) **IMPROVED DRY BLEND FOR MAKING CHEESE ANALOGUE**

(30) Priority: 30.11.2012 US 201261731917 P
(62) Divisional of application: 13857916.4
(71) Applicant: Allied Blending & Ingredients Inc., St. Louis, MO 63132 (US)
(72) Inventor: Atapattu, Chandrani, St Louis, MO Missouri 63132 (US); Fannon, John, St Louis, MO Missouri 63132 (US)
(74) Representative: Bridle, Andrew Barry

(57) **Abstract**

Disclosed herein are dry blends used in the process of making cheese analogues with an improved economic profile. Further, the blends disclosed herein may be used to 100% analogue, vegan or low-moisture cheeses.

## Description

This application claims the benefit of priority of United States provisional application No. 61/731,917, filed November 30, 2012, the disclosure of which is hereby incorporated by reference as if written herein in its entirety.

In recent years there has been a significant increase in demand for cheese generally, as well as for cheeses with specific performance or nutritional characteristics. This general demand is driven in part by the steady growth in the ready meal or convenience food sector of the food industry since cheese is an ingredient in many foods within this sector. The increasing popularity of various pizza-type products is one specific example of cheese-containing products in this sector that have contributed to the surge in demand. These concerns, as well as cost considerations, have been the impetus for the development of a number of cheese analogues (e.g., imitation cheeses or cheese substitutes) that offer various health advantages (e.g., replacement of animal fat with healthier vegetable oil and increased vitamin or mineral levels) and cost benefits (e.g., vegetable oils are less expensive than certain dairy ingredients).

Cheese analogues constitute a major category of cheese. As alluded to above, there has been an increased demand for cheese analogue because of cost and health considerations. Cheese analogue generally refers to a cheese in which milk fat and/or a protein source has been substituted with a source that is not native to milk. Cheese analogues are typically lower cost than other cheese types because the processing can be performed less expensively and because certain milk ingredients can be substituted with cheaper products (e.g., substituting vegetable oil for milk fat). The health benefits derive from substitution of the milk fat and protein with other healthier substitutes and the ability to add other ingredients that can improve the nutritional characteristics of the final product.

Cheese analogues are typically categorized as dairy, partial dairy, or nondairy, depending on whether the fat and/or dairy components are from dairy or vegetable sources. They can also be classified as being an imitation cheese or a substitute cheese. Imitation cheese is a substitute for and resembles another cheese but is nutritionally inferior to that cheese. A cheese substitute, on the other hand, resembles another cheese but is not nutritionally inferior to that cheese.

However, replacing a conventional cheese composition ingredient can present one or more technical hurdles because cheese compositions are complex compositions and their properties can be sensitive to (i.e., require) the presence and/or amount of certain ingredients. Thus, conventional cheese manufacturing has come to rely on certain cheese composition ingredients to provide certain properties. Exemplary technical challenges include finding a substitute ingredient that can provide a cheese composition with one or more suitable functional properties (e.g., melt, stretch, and firmness), organoleptic properties (e.g., texture and flavor), and nutritional properties.

Casein is one of the major components of cheese analogues. These proteins are commonly found in mammalian milk, making up 80% of the proteins in cows' milk. Over the last few years casein has dramatically increased in price. Accordingly, there is an ongoing need in the cheese industry for a substitute for casein in the manufacture of cheese analogues. One such substitute is the use of whey. Whey can be used to reduce or eliminate the need for the use of casein in making cheese analogues.

Another substitute is certain types of starch. However, the ability to replace casein protein with starch can be significantly limited depending on the desired functional, organoleptic, and/or nutritional properties of the cheese composition. For example, replacing casein with starch can provide a cheese composition with less than desired functional properties (e.g., melt, stretch, and firmness) because starch is not necessarily always a "functional" replacement of casein protein, but can merely replace a certain mass of casein protein. Similarly, starch can impart a different, sometimes less desirable, flavor and/or texture to the cheese composition than provided by casein. Furthermore, replacing casein protein with starch, a carbohydrate, can significantly alter the nutritional characteristics of a cheese composition. Thus, conventional cheese making has come to rely on the mere presence and sometimes quantity of casein protein to provide certain cheese composition properties.

Despite these limitations, there exists a strong desire (e.g., economic incentives) to further reduce the amount of casein protein in certain cheese compositions. Many demographics receive most of their proteins and/or carbohydrates from a single source, such as rice. The availability of low-cost cheese adds diversity to their diets, and allows proteins from other sources. Demographics that traditionally include cheese in their diets are able to include cheese even in a recessed economic climate with the availability of low-cost cheeses. However, providing suitable functional, organoleptic, and nutritional characteristics while reducing the casein protein even further in certain cheese compositions presents significant technical challenges.

Another ingredient that is commonly found in cheese analogues is shortening, which often contains trans-fat. In general, recent consumer trends indicate that trans-fatty acids (i.e., "trans-fat") in food products and food intermediates are being avoided by consumers to help increase the healthfulness of their diet. Accordingly, many food product marketers are finding ways to provide consumers with food products having reduced and/or substantially no trans-fat content.

Trans-fat is an unsaturated fatty acid in which the hydrogen atoms of a double bond (or unsaturation) are on opposite sides of the molecule. The *trans* isomer of the fatty acid causes the carbon chain to assume a straight-chain configuration similar to that of a saturated fat. Trans-fatty acids are primarily formed through the metal-catalyzed process of hydrogenation; however they have also been found to form naturally and are found at low levels in cow's milk. By hydrogenating oils through industrial processing, hydrogen atoms are added to unsaturated sites on fatty acids, creating a larger population of saturated fats in the oil. In a partially-hydrogenated oil, some of the unsaturated fatty acids remain. However, the processing causes some of the double-bonds of the unsaturated fatty acids to undergo isomerization from the *cis* configuration to the *trans* configuration.

Partial hydrogenation of fats was introduced into the U.S. food supply beginning in 1910. The practice was put into widespread use in the 1940's in order to make semisolid fat products. The process of hydrogenation raises the melting point of a fat and increases the solid fat content. Such fats having higher melting points and solid fat content help provide food compositions (e.g., cheese compositions) with highly desirable functional properties. For example, oils containing trans-fats can help an cheese analogue to have highly desirable properties (e.g., melt, crumble, stretch, firmness, combinations of these, and the like) at one or more temperatures (e.g., shred temperature, temperature of a consumer's mouth, combinations of these, and the like). In addition, the stability of the fat is greatly enhanced through hydrogenation by reducing susceptibility to oxidation and subsequent rancidity. Therefore, positive contributions to processing properties, shelf-life, texture, and taste of food products (e.g., cheese compositions and food products incorporating such cheese compositions) are imparted by hydrogenated and partially hydrogenated fats.

A recent consumer trend is to avoid consuming food products that are high in, or have an undue amount of, trans-fat. To help meet consumer demand many food manufacturers would like to provide consumers with food products (e.g., cheese analogues and food products that include cheese (e.g., snack food (e.g., frozen snack food) including pizza, pizza-type snack food, and the like)) having a low amount of trans-fat (e.g., about 5% or less by weight of trans-fat based on the total weight of the fat component). However, changing the formulation of a food composition to accommodate this can present significant technical hurdle(s) because of the reliance specifically on trans-fat containing ingredients to provide one or more highly desirable properties in food products and food product intermediates. Changing the trans-fat content of a food product can significantly impact properties such as processing properties, organoleptic properties, combinations of these, and the like, of the food product. As mentioned above, cheese analogues are complex chemical compositions; therefore their properties (e.g., melt, crumble, stretch, firmness, combinations of these, and the like) could be unduly affected by changes in formulation amounts and/or ingredient(s) that would affect trans-fat content. Accordingly, there is a strong need to provide cheese analogues having a low amount of trans-fat (e.g., about 5% or less by weight of trans-fat based on the total weight of the fat component) while at the same time substantially maintaining and/or improving cheese analogue properties such as melt, crumble, stretch, firmness, combinations of these, and the like. In addition, there is a strong need to provide food product(s) including such cheese analogues and methods of making such cheese analogues and food products.

### SUMMARY OF INVENTION

It has been discovered that a unique combination of protein and starch provides a cheese analogue that has excellent flexibility with respect to formulation changes because the resulting cheese analogue can exhibit substantially the same or improved properties (e.g., functional/processing properties, organoleptic properties, combinations of these, and the like) over a range of significantly different cheese formulations.

There is disclosed a dry blend useful in the manufacture of making processed cheese. This dry blend is particularly useful for those who are making cheese processed cheese since the dry blend is easily used in the manufacture of processed cheese product by the addition of water and fat/oils and optional with the addition of curd and flavoring to produce the desired product.

### Further embodiments disclose:

A pre-filled cheese analogue package having a dry blend comprising:
a. 60% - 90% starch;
b. 0% - 10% emulsifying salt; and
c. 0% - 10% stabilizers
   wherein said dry blend is homogenously blended and filled into said pre-filled package.

In an embodiment, said pre-filled cheese analogue package has a dry blend comprising:
a. 80% - 90% starch;
b. 0% - 7% emulsifying salt; and
c. 1% - 7% stabilizers.

In an embodiment, said pre-filled cheese analogue package has a dry blend comprising:
a. 80% - 88% starch;
b. 0% - 5% emulsifying salt; and
c. 2.5% - 5.7% stabilizers.

In an embodiment, said pre-filled cheese analogue package has a dry blend comprising:
a. 75% - 98% starch;
b. 0% - 10% emulsifying salt; and
c. 0% - 10% stabilizers.

In an embodiment, said pre-filled cheese analogue package has a dry blend comprising:
a. 80% - 95% starch;
b. 0% - 5% emulsifying salt; and
c. 0% - 5% stabilizer.

In an embodiment, said pre-filled cheese analogue package has a dry blend comprising:
a. 85% - 95% starch;
b. 0% - 3% emulsifying salt; and
c. 0% - 3% stabilizers.

In an embodiment, said pre-filled cheese analogue package has a dry blend comprising:
a. 65% - 80% starch;
b. 0% - 10% emulsifying salt; and
c. 0% - 10% stabilizers.

In an embodiment, said pre-filled cheese analogue package has a dry blend comprising:
a. 67% - 77% starch;
b. 3% - 9% emulsifying salts; and
c. 0% - 6% stabilizers.

In an embodiment, said pre-filled cheese analogue package has a dry blend comprising:
a. 69% - 77% starch;
b. 5% - 9% emulsifying salts; and
c. 2% - 6% stabilizers.

In an embodiment, said pre-filled cheese analogue package further comprises an acidulant.

In an embodiment, said pre-filled cheese analogue package contains 0% - 3% of an acidulant.

In an embodiment, said pre-filled cheese analogue package contains 0% - 1% of an acidulant.

In an embodiment, said acidulant is chosen from sorbic acid, acetic acid, citric acid, fumaric acid, lactic acid, malic acid, phosphoric acid, tartaric acid, aconitic acid, adipic acid, benzoic acid, caprylic acid, cholic acid, desoxycholic acid, ascorbic acid, erythorbic acid, formic acid, glycocholic acid, hydrochloric acid, glutamic acid, linoleic acid, nicotinic acid, pectinic acid, phosphoric acid, propionic acid, stearic acid, succinic acid, sulfuric acid, tannic acid, taurocholic acid, and thiodipropionic acid.

In an embodiment, said acidulant is chosen from citric acid, lactic acid, and acetic acid.

In an embodiment, said pre-filled cheese analogue package further comprises whey.

In an embodiment, said pre-filled cheese analogue package further comprises salt.

In an embodiment, said pre-filled cheese analogue package contains 0% - 10% of salt.

In an embodiment, said pre-filled cheese analogue package contains 3% - 8% of salt.

In an embodiment, said pre-filled cheese analogue package contains 4.5% - 7% of salt.

In an embodiment, said pre-filled cheese analogue package further comprises a preservative.

In an embodiment, the preservative is sorbic acid.

In an embodiment, said pre-filled cheese analogue package contains less than 15% water.

In an embodiment, said pre-filled cheese analogue package contains less than 10% water.

In an embodiment, said pre-filled cheese analogue package contains less than 5% water.

A cheese analogue comprising said pre-filled cheese analogue package as disclosed herein, a fat, and water.

In an embodiment, the cheese analogue further comprises cheese.

In an embodiment, the cheese comprises 0-80% of the cheese analogue.

A pre-filled cheese analogue package for use in making a cheese analogue comprising: combining said pre-filled cheese analogue package as disclosed herein, a fat, and water; mixing the ingredients to form a mixture; and heating and cooling the mixture to provide a cheese analogue.

In an embodiment, the use further comprises combining cheese.

In an embodiment, the cheese analogue is allergen free.

In an embodiment, the cheese analogue is vegan.

In an embodiment, the cheese analogue is shreddable.

In an embodiment, the cheese analogue is dairy free

In an embodiment, the fat is a vegetable fat.

In an embodiment, said cheese analogue is 100% analogue, i.e. contains no cheese.

An cheese analogue comprising:
a. 15% - 30% of a dry blend;
b. 15% - 30% of a fat; and
c. 30% - 80% water,
wherein said dry blend, fat, and water have been mixed, cooked, and cooled to provide a cheese analogue.

In an embodiment, an cheese analogue comprises:
a. 20% - 25% of a dry blend;
b. 20% - 25% of a fat; and
c. 45% - 65% water,
wherein said dry blend, fat, and water have been mixed, cooked, and cooled to provide a cheese analogue.

A low-moisture cheese analogue comprising:
a. 40% - 70% of a dry blend;
b. 15% - 30% of a fat; and
c. 15% - 35% water,
wherein said dry blend, fat, and water have been mixed, cooked, and cooled to provide a low-moisture cheese analogue.

In an embodiment, a low-moisture cheese analogue comprises:
a. 60% - 70% of a dry blend;
b. 15% - 25% of a fat; and
c. 20% - 30% water,
wherein said dry blend, fat, and water have been mixed, cooked, and cooled to provide a low-moisture cheese analogue.

In an embodiment, said low-moisture cheese is chosen from mozzarella, parmesan, and string.

In an embodiment, said low-moisture cheese is parmesan.

In an embodiment, the cheese analogue further comprises 0% - 5% of a humectant.

In an embodiment, said humectant is chosen from salt, sugar, sorbitol, propylene glycol, glycerin, polyhydric alcohols, carbo waxes.

In an embodiment, the humectant is glycerin.

In an embodiment, said cheese analogue is shredded and packaged.

### DETAILED DESCRIPTION

A "cheese analogue" as used herein refers generally to a cheese in which a milk fat and/or a protein source has been substituted with a source that is not native to milk. The basic ingredients for a cheese analogue are usually water, casein, a fat/oil and a sequestering agent. Cheese analogues are typically categorized as dairy, partial dairy, or nondairy, depending on whether the fat and/or dairy components are from dairy or vegetable sources. They can also be classified as being an imitation cheese or a substitute cheese. Imitation cheese is a substitute for and resembles another cheese but is nutritionally inferior to that cheese. A cheese substitute, on the other hand, resembles another cheese but is not nutritionally inferior to that cheese.

Processed cheese has several technical advantages over unprocessed cheese, including extended shelf-life, resistance to separation when cooked, and uniformity of product. Its production also enjoys significant economic advantages over traditional cheese-making processes, most often through the ability to incorporate any of a wide variety of less expensive ingredients.

Emulsifying salts are used to provide a uniform structure during the melting process by creating emulsions. The essential role of the emulsifying agents in the manufacturing of processed cheese is to give enough buffering capacity to supplement the emulsifying capability of cheese casein proteins. This is accomplished by removing calcium from the proteins; solubilizing and dispersion of the proteins; ionizing the casein micelle, hydrating and swelling of the casein micelle; emulsifying of fat and stabilizing of the emulsion and by forming an appropriate structure after cooling. The use of emulsifiers in processed cheese results in cheese that melts smoothly when cooked.

A number of different types of starches can be incorporated into the dry blend. Suitable starches include vegetable starches (e.g., potato starch, pea starch, and tapioca) and grain starches (e.g., corn starch, wheat starch, and rice starch). Specific examples of suitable corn starches include dent corn starch, waxy corn starch, and high amylose corn starch. The starches can be used individually or in combination. As noted above, starches can advantageously be included in the slurry. In some applications, the starch is added as a powder or unheated solution but, as explained above, at lower concentration levels. The starch can be modified or native. Modified food starches differ in their degree of crosslinking, type of chemical substitution, oxidation level, degree of molecular scission, and ratio of amylose to amylopectin.

The synergistic interaction of stabilizers improves the textural quality of foods. It imparts rich mouth feel without masking flavor, enhances moisture retention, prevents syneresis and ice crystal formation in frozen products and forms thermally reversible gels. Examples of suitable stabilizers include chondrus extract (carrageenan), pectin, gelatin, and agar, and a variety of gums such as, but are not limited to, xanthan gum, guar gum, konjac flour and locust bean gum.

Acidulants are additives that give a sharp taste to foods by increasing the tartness or acidity. They also assist in the setting of gels and to act as preservatives. An acidulant (acidic agent) can be incorporated to adjust the pH of the finished cheese to a desired level. The acidity of the cheese can be controlled to help regulate the melt down characteristics of the finished cheese. Various acids can be employed; examples of suitable acids include, but are not limited to, acetic acid, citric acid, fumaric acid, lactic acid, malic acid, phosphoric acid, tartaric acid adipic acid, hydrochloric acid, glucano delta lactone, lactobionic acid or Genlac C, the latter being a blend of water, citric acid, lactic acid, acetic acid and artificial flavors. Acid is typically added to adjust the pH of the finished cheese to a pH from about 5-6 is reached, and more typically from pH 5.50-6.0.

A colorant can be incorporated into the soft or firm/semi-hard ripened or unripened blended cheese to adjust its natural color. This can be useful, for example, if consumers have a preference for a color other than the naturally-occurring color. Examples of suitable colorants include annatto, turmeric, titanium dioxide, and beta-carotene. Colorants may be of both the natural or artificial color. If one wished to color the cheese a red, an artificial color such as FD&C red # 40 can be used. Annatto imparts a yellowish color to cheese. The yellowish color often is preferred by consumers who perceive it to indicate a "richer" product upon cooking on a pizza.

Colorants can be incorporated into the final soft or firm/semi-hard ripened or unripened blended cheese product by inclusion in the slurry. The amount of colorant added is typically in the range of about 0.0001 to 0.001%, based on the weight of the finished cheese. Turmeric, if used, is generally added in an amount of about 0.0001 to 0.001%. If annatto is added, it normally is added to about 0.1 to 0.9% by weight.

Various flavoring agents can also be incorporated into the cheese to tailor the flavor profile of the cheese to meet consumer preferences. Suitable flavors for mixing into the heated cheese include, for example, natural mozzarella flavor such as diacetyl and/or lipolyzed fat.

Flavoring agents can be incorporated into the final soft or firm/semi-hard ripened or unripened blended cheese product by incorporation into the heated slurry or by addition to the heated cheese mass as a dry powder, or more typically as part of an unheated aqueous solution. Flavoring agents are typically added in an amount such that the concentration in the final cheese product is within the range of about 0.01 to 5 wt. %. If incorporated into the slurry, the concentration of the flavoring agent in the slurry is generally is in the range of about 0.11-4.50 wt. %.

Fat refers to various vegetable fats. These fats may be partially or fully hydrogenated, yielding a cheese product that is low in trans-fat. In an embodiment, the fat has a melting point close to that of butter fat, 86-126°F. Further, the fat may be blended with a liquid fat (oil) during the chees making process.

Whey is the liquid remaining after milk has been curdled and strained. It is a byproduct of the manufacture of cheese or casein and has several commercial uses. Sweet whey is manufactured during the making of rennet types of hard cheese like mozzarella, cheddar or Swiss cheese.

Cheese curds are an important step in the cheese making process. They are small chunks of cheese casein micelles which have been separated from the natural whey present in milk, but not yet pressed into molds to make cheese. Different treatments of the curds yield different end cheeses, and the curds can also be eaten straight. The curdling process coagulates the solids in the milk, yielding cheese curds swimming in whey. The whey is drained from the curds, which may also be cut to facilitate drainage, and then the cheese curds can be salted, packed into molds, and turned into cheese.

Dry blend refers to the "dry" (i.e. less than 15% water) starting material one would use in make of cheese like product. Normally water and some type of fat would be added to produce the cheese analogue. One could also add in a desired flavor to resemble the desired cheese taste.

The dry blend that is provide here for use in the cheese analogue product is designed to improve: 1) melt and flow ability of the final cheese product, which is a measure of how well the cheese melts and flows into a homogenous mass, preferably with little or no individual shreds of cheese still detectable; 2) stretch, which is measure of the ability of the cheese to form interconnected strings when the heated cheese is pulled; 3) texture, which is a measure of chewiness and smoothness; 4) coloring, which is a measure of the actual color of the melted cheese; 5) blister characteristics, which may include size, color and extent of coverage; and/or 6) nutritional composition.

The dry blends described herein are manufactured it in one step by blending all the dry material contained in the formulas described herein in a double ribbon blender. These batches are blended during addition of the ingredients, and then blended an additional 10 minutes, or until a homogenous mixture is obtained, after all ingredients have been added. Optionally, mineral oil can be sprayed on with the blender running, with an additional 10 minutes of blending, or until a homogenous mixture is obtained. The dry product obtained at the conclusion of the blending is packed and is ready to be packaged or used in the cheese making process.

### DRY BLEND EXAMPLES

Examples 1-10 are for making a dry blend for use in making salad block cheese.

| | **Example 1** | **Example 2** | **Example 3** | **Example 4** |
|---|---|---|---|---|
| Ingredients | Weight % | Weight % | Weight % | Weight % |
| Acid-treated Corn Starch | 41.02 | 0 | 11.19 | 0 |
| Bleached Corn Starch | 32.88 | 0 | 11.19 | 0 |
| Native Corn Starch | 0 | 80.04 | 55 | 79.04 |
| Whey | 4.05 | 0 | 0 | 0 |
| Distarch Phosphate | 7.16 | 5.05 | 5 | 4.75 |
| Salt | 5.4 | 5.4 | 5.4 | 5.4 |
| Gelatin | 2 | 3 | 3 | 3 |
| Sodium Citrate | 2 | 2.01 | 2.01 | 2.01 |
| Starch sodium octenylsuccinate | 2.5 | 2 | 5 | 3 |
| Blend of Xanthan, Locust, and Guar Gums | 1.5 | 1.5 | 1.5 | 1.5 |
| Sorbic Acid | 0.8 | 0.8 | 0.4 | 0.8 |
| Citric Acid | 0 | 0 | 0.1 | 0 |
| Tricalcium Phosphate | 0.2 | 0.2 | 0.2 | 0.5 |
| Carrageenan | 0.5 | 0 | 0 | 0 |
| TOTAL INGREDIENTS | 100 | 100 | 100 | 100 |

| | **Example 5** | **Example 6** | **Example 7** |
|---|---|---|---|
| Ingredients | Weight % | Weight % | Weight % |
| Acid-treated Corn Starch | 29.92 | 41.17 | 0 |
| Bleached Corn Starch | 25 | 32.98 | 0 |
| Native Corn Starch | 0 | 0 | 77.22 |
| Whey | 20 | 4.05 | 0 |
| Hydroxypropyl distarch phosphate | 10 | 0 | 0 |
| Distarch Phosphate | 0 | 7.15 | 5.04 |
| Salt | 5.4 | 5.4 | 5.4 |
| Gelatin | 2.5 | 2 | 3 |
| Sodium Citrate | 2 | 2 | 2.01 |
| Starch sodium octenylsuccinate | 2 | 2.5 | 5 |
| Blend of Xanthan, Locust, and Guar Gums | 1.5 | 1.5 | 1.5 |
| Sorbic Acid | 0.8 | 0.2 | 0.4 |
| Citric Acid | 0 | 0.1 | 0.1 |
| Potassium Sorbate | 0 | 0.1 | 0 |
| rice bran extract | 0.4 | 0 | 0 |
| Disodium Phosphate Duohydrate | 0.33 | 0.35 | 0.33 |
| Carrageenan | 0.15 | 0.5 | 0 |
| TOTAL INGREDIENTS | 100 | 100 | 100 |

| | **Example 8** |
|---|---|
| Ingredients | Weight % |
| Acid-treated Corn Starch | 42.78 |
| Bleached Corn Starch | 34.01 |
| Distarch Phosphate | 7.21 |
| Salt | 5.4 |
| Gelatin | 3 |
| Sodium Citrate | 2 |
| Starch sodium octenylsuccinate | 3 |
| Blend of Xanthan, Locust, and Guar Gums | 1.5 |
| Sorbic Acid | 0.8 |
| Tricalcium Phosphate | 0.3 |
| TOTAL INGREDIENTS | 100 |

| | **Example 9** | **Example 10** |
|---|---|---|
| **Ingredients** | Weight % | Weight % |
| Native Corn Starch | 30.03 | 29.91 |
| Acid-treated Corn Starch | 38.977 | 38.821 |
| Hydroxypropyl distarch phosphate | 8.024 | 7.992 |
| Whey | 5.015 | 4.995 |
| Gelatin | 2.006 | 3.996 |
| Starch sodium octenylsuccinate | 5.015 | 4.995 |
| Salt | 6.52 | 6.494 |
| Xanthan gum | 0.201 | 0.2 |
| Blend of Xanthan, Locust, and Guar Gums | 0.502 | 0.5 |
| Calcium Sulfate | 2.006 | 0.4 |
| Potassium Sorbate | 0.903 | 0.5 |
| Sorbic Acid | 0 | 0.4 |
| Tricalcium Phosphate | 0.401 | 0.4 |
| Trisodium Phosphate | 0.201 | 0.2 |
| Citric Acid | 0.201 | 0.2 |
| TOTAL | 100 | 100 |

Examples 11-14 are for making a dry blend for use in making vegan cheese.

| | **Example 11** | **Example 12** | **Example 13** | **Example 14** |
|---|---|---|---|---|
| **Ingredients** | Weight % | Weight % | Weight % | Weight % |
| Native Corn Starch | 25.89 | 26.21 | 30.42 | 27.04 |
| Acid-treated Corn Starch | 25.74 | 26.06 | 30.27 | 26.88 |
| Combination of Acetylated, Distarch Adipate and Starch sodium octenyl succinate | 22 | 22 | 15 | 22.59 |
| Hydroxypropyl distarch phosphate | 9.25 | 9.57 | 8.5 | 7.5 |
| Salt | 5.83 | 5.83 | 5.83 | 5.83 |
| Acid-treated Corn Starch | 5.63 | 5.63 | 5.63 | 5.63 |
| Starch sodium octenylsuccinate | 1.5 | 1.5 | 1.5 | 1.5 |
| Blend of Xanthan, Locust, and Guar Gums | 1 | 1 | 0.8 | 1 |
| Tricalcium Phosphate | 1 | 0.1 | 0.1 | 0.08 |
| Sorbic Acid | 0.8 | 0.8 | 0.8 | 0.8 |
| Trisodium Phosphate | 0 | 0.3 | 0.3 | 0.3 |
| Color & Flavor | 0.68 | 0 | 0 | 0 |
| Carrageenan | 0.49 | 0.81 | 0.65 | 0.65 |
| Citric Acid | 0.2 | 0.2 | 0.2 | 0.2 |
| TOTAL | 100 | 100 | 100 | 100 |

Examples 15-18 are for making a dry blend for use in making low-moisture cheese, such as parmesan.

| | **Example 15** | **Example 16** | **Example 17** | **Example 18** |
|---|---|---|---|---|
| **Ingredients** | Weight % | Weight % | Weight % | Weight % |
| Oxidized Potato Starch | 51.54 | 52 | 52.3 | 53.22 |
| Hydroxypropyl distarch phosphate | 7.82 | 0 | 8 | 7.82 |
| Gelatin | 1 | 2.24 | 0.6 | 1 |
| Whey | 12 | 14.58 | 8 | 8.02 |
| Carrageenan | 0.1 | 0.1 | 1.2 | 0.5 |
| Starch sodium octenylsuccinate | 14 | 17.54 | 10 | 15 |
| Salt | 5 | 5 | 6.2 | 5.4 |
| Disodium Phosphate | 2.5 | 2.5 | 4.5 | 2.5 |
| Sodium Citrate | 2.42 | 2.42 | 4 | 2.42 |
| Calcium Sulfate | 0.38 | 0.38 | 0.4 | 0.38 |
| Potassium Sorbate | 0.43 | 0.43 | 0.6 | 0.43 |
| Sorbic Acid | 0.32 | 0.32 | 0.4 | 0.32 |
| Titanium Dioxide | 0.15 | 0.15 | 0.15 | 0.15 |
| Lecithin | 1.61 | 1.61 | 2 | 1.61 |
| Citric Acid | 0.43 | 0.43 | 0.45 | 0.43 |
| Mineral Oil | 0.3 | 0.3 | 0 | 0.3 |
| Blend of Xanthan, Locust, and Guar Gums | 0 | 0 | 1.2 | 0.5 |
| TOTAL | 100 | 100 | 100 | 100 |

The dry blends disclosed herein can be made into cheese analogue via the following processes.
a. Add water, the dry blend and the fat, in that order, and blend for 5 minutes. Cook the mixture to 155°F-162°F. Add additional water. Cook to 182°F; or
b. Melt the fat, add the water, and 1 mix for 1 minute either during or after the addition of the dry blend. Heat the mixture to around 140-165°F, and then mix for 2 minutes and heat to 170-182°F; or
c. Melt the fat and add the dry blend. Cook the mixture to 140-165°F. Optionally, stop the heating and mix the slurry; then heat to 180°F; then
d. Form the cheese analogue and cool it. The cheese analogue can then be packaged and refrigerated. Once cool, the product may be shredded or sliced, if desired. The amount of natural cheese product used may vary, such as from 0%-80%, depending the on the desired product.

It is understood that the examples and embodiments described herein are for illustrative purposes only and that various modifications or changes in light thereof will be suggested to persons skilled in the art and are to be included within the spirit and purview of this application and scope of the appended claims. The cheeses of the present invention may be made by the methods described herein, or by any other method that produces a finished cheese product having the same physical or chemical properties as the present cheeses. All publications, patents and patent applications cited herein are hereby incorporated by reference in their entirety for all purposes to the same extent as if each individual publication, patent or patent application were specifically and individually indicated to be so incorporated by reference.

## Claims

1. A pre-filled cheese analogue package having a dry blend comprising:
a. 60% - 90% starch;
b. 0% - 10% emulsifying salt; and
c. 0% - 10% stabilizers,
wherein said dry blend is homogenously blended and filled into said pre-filled package.

2. The pre-filled cheese analogue package having a dry blend as recited in Claim 1, comprising:
a. 80% - 90% starch;
b. 0% - 7% emulsifying salt; and
c. 1% - 7% stabilizers
preferably wherein the dry blend comprises:
a. 80% - 88% starch;
b. 0% - 5% emulsifying salt; and
c. 2.5% - 5.7% stabilizers.

3. The pre-filled cheese analogue package having a dry blend as recited in Claim 1, wherein said blend contains
a. 75% - 98% starch;
b. 0% - 10% emulsifying salt; and
c. 0% - 10% stabilizers
preferably wherein said blend contains
a. 80% - 95% starch;
b. 0% - 5% emulsifying salts; and
c. 0% - 5% stabilizers
more preferably wherein said blend contains
a. 85% - 95% starch;
b. 0% - 3% emulsifying salt; and
c. 0% - 3% stabilizer.

4. The pre-filled cheese analogue package having a dry blend as recited in Claim 1, wherein said blend contains
a. 65% - 80% starch;
b. 0% - 10% emulsifying salt; and
c. 0% - 10% stabilizers
preferably wherein said blend contains
a. 67% - 77% starch;
b. 3% - 9% emulsifying salts; and
c. 0% - 6% stabilizers.
more preferably wherein said blend contains
a. 69% - 77% starch;
b. 5% - 9% emulsifying salts; and
c. 2% - 6% stabilizers.

5. The pre-filled cheese analogue package having a dry blend as recited in Claim 1,
wherein said blend further comprises an acidulant.

6. The pre-filled cheese analogue package having a dry blend as recited in Claim 5,
wherein said blend contains 0% - 1% of an acidulant.

7. The pre-filled cheese analogue package having a dry blend as recited in Claim 5,
wherein said acidulant is chosen from acetic acid, citric acid, fumaric acid, lactic acid, malic acid, phosphoric acid, and tartaric acid, preferably
wherein said acidulant is chosen from sorbic acid, citric acid, lactic acid, and acetic acid.

8. The pre-filled cheese analogue package having a dry blend as recited in Claim 1,
wherein said blend further comprises whey or
wherein said blend further comprises a preservative, preferably
wherein said preservative is sorbic acid, or
wherein said blend further comprises salt, preferably
wherein said blend contains 0% - 10% of salt, more preferably
wherein said blend contains 3% - 8% of salt, still more preferably
wherein said blend contains 4.5% - 7% of salt, or
wherein said blend contains less than 10% water, preferably
wherein said blend contains less than 5% water.

9. A cheese analogue comprising a pre-filled cheese analogue package having a dry blend as recited in Claim 1, a fat, and water.

10. The cheese analogue as recited in Claim 9 further comprising cheese and/or cheese curds, preferably
wherein said cheese and/or cheese curds comprises 0-80% of the cheese analogue.

11. The cheese analogue as recited in Claim 9, wherein said cheese is allergen free, or
wherein said cheese is vegan, or
wherein said cheese is shreddable, or
wherein said fat is a vegetable fat, or
wherein said cheese analogue is dairy free.

12. An cheese analogue comprising:
a. 15% - 30% of a dry blend;
b. 15% - 30% of a fat; and
c. 30% - 80% water,
wherein said dry blend, fat, and water have been mixed, cooked, and cooled to provide a cheese analogue, preferably wherein.
the cheese analogue comprises:
a. 20% - 25% of a dry blend;
b. 20% - 25% of a fat; and
c. 45% - 65% water,
wherein said dry blend, fat, and water have been mixed, cooked, and cooled to provide a cheese analogue.

13. A low-moisture cheese analogue comprising:
a. 40% - 70% of a dry blend;
b. 15% - 30% of a fat; and
c. 15% - 35% water,
wherein said dry blend, fat, and water have been mixed, cooked, and cooled to provide a low-moisture cheese analogue.

14. The low-moisture cheese analogue as recited in Claim 13 comprising:
a. 60% - 70% of a dry blend;
b. 15% - 25% of a fat; and
c. 20% - 30% water,
wherein said dry blend, fat, and water have been mixed, cooked, and cooled to provide a low-moisture cheese analogue.

15. The low-moisture cheese analogue as recited in Claim 13 wherein said low-moisture cheese is chosen from mozzarella, parmesan, and string, preferably
wherein said low-moisture cheese is parmesan.

16. The cheese analogue as recited in either of Claims 12 or 13 further comprising 0% - 5% of a humectant.

17. The cheese analogue as recited in Claim 16 wherein said humectant is chosen from salt, sugar, sorbitol, propylene glycol, glycerin, polyhydric alcohols, carbo waxes, preferably
wherein said humectant is glycerin.

18. A method of making a cheese analogue comprising: combining a pre-filled cheese analogue package having a dry blend as recited in Claim 1, a fat, and water; mixing the ingredients to form a mixture; and heating and cooling the mixture to provide a cheese analogue
optionally further comprising combining cheese in the mixture,
preferably wherein said fat is a vegetable fat.
